# EUROPEAN PATENT SPECIFICATION

(11) **EP 3 751 689 B1**
(45) Date of publication and mention of the grant of the patent: **07.02.2024**
(21) Application number: 19382490.1
(22) Date of filing: 13.06.2019
(51) Int. Cl.: H02G 3/10, H02G 3/38, H02G 3/04, H01R 25/16

(54) **MODULAR UNIT FOR SUPPLY OF ELECTRICAL POWER AND/OR DATA**
MODULARE EINHEIT ZUR BEREITSTELLUNG VON ELEKTRISCHER ENERGIE UND/ODER DATEN
UNITÉ MODULAIRE POUR LA FOURNITURE D'ÉNERGIE ÉLECTRIQUE ET/OU DE DONNÉES

(43) Date of publication of application: 16.12.2020
(73) Proprietor: Schneider Electric España, S.A., 08019 Barcelona (ES)
(72) Inventor: REBOLÉ OLLETA, JOSE ANTONIO, 31100 PUENTE LA REINA (NAVARRA) (ES); GONZÁLEZ IRIBAS, AITOR, 31100 PUENTE LA REINA (NAVARRA) (ES); DAMIEN DELOY, JONATHAN, 31100 PUENTE LA REINA (NAVARRA) (ES); SÁINZ HERMOSO, PEDRO MATÍAS, 31100 PUENTE LA REINA (NAVARRA) (ES)
(74) Representative: Plasseraud IP

(56) References cited:
- EP-A1- 0 800 249
- EP-A1- 1 075 066
- EP-A2- 1 433 997
- WO-A1-2012/097846

## Description

### Technical field

The present invention relates to the industry dedicated to modular units used to provide power and/or data.

### State of the art

Modular units configured by way of connection panels or busbars to provide at least one component that can be fed by means of electrical power and/or data, for the purpose of being used for feeding electrical and electronic devices, said units being arranged according to fixed locations, for example in walls, floors or tables, are widely known today.

Once the known modular units are once acquired and installed, while they may be predefined with considerably wide ranging characteristics, they offer a given configuration with regard to the number and type of connections.

Today, the use of said electronic devices requiring power and/or data is constantly expanding in amount and type. For this reason, the existing modular units tend to offer an insufficient number of connections and types of connections that are inadequate or which are simply obsolete.

Accordingly, a solution available today for meeting those needs which may arise consists of uninstalling the corresponding modular unit and acquiring a new modular unit to replace it. This option is effective, but it entails an additional cost that involves the modular unit previously acquired and installed no longer being amortized.

Another solution that can be used today can consist of opening or disassembling the corresponding modular unit and replacing the components available with new ones selected depending on the observed needs. While this option may be effective, it has, in turn, various limitations.

Some of these limitations include the advisable intervention of specialised personnel for carrying out the corresponding substitution, in addition to the limitation represented by at least one of the measurements of the modular unit which inevitably conditions the increase in the number of components, and therefore the electrical and/or data connections, to be arranged in the corresponding modular unit.

In view of the described drawbacks or limitations of the solutions existing today, a solution which provides capacity and flexibility for establishing on one hand the number of connections and, on the other, the type of connections offered by the modular units is necessary.

Examples of prior art can be found for instance in EP 0800249 A1 disclosing a modular electrical installation system and quick mounting process; WO 2012/097846 A1 disclosing a conductor rail assembly; EP 1433997 A2 disclosing an electrical lighting module for cascaded connection comprising at least a fluorescent tube; or EP 1075066 A1 disclosing a serializable power receiver/supply unit.

### Object of the invention

For the purpose of meeting this objective and solving the technical problems discussed up until now, in addition to providing additional advantages that may be derived below, the present invention provides a modular unit for the supply of electrical power and/or data in accordance with claim 1.

The casings comprise two parts that can be attached to one another by snap fitting. Additionally or alternatively, the casings can comprise a through hole for being fixed to an external structural element.

The casings are configured for surrounding the perimeter of at least one of the connectors.

More specifically, one of the casings is configured for covering the outer face of the covers.

Optionally, there are two raceways, the first connector of one of the raceways being arranged connected with the second connector of the other one of the raceways and another one of the casings between the two raceways.

At least one of the covers may comprise a releasable area having at least one detachable portion which is removable, determining a passage through the cover. Preferably, there are two or more detachable portions for determining a through hole having a variable size.

The modular unit preferably comprises a separating element configured for defining two spaces along at least one segment of the longitudinal extension of the raceway.

The covers preferably have through housings for housing the connectors, such that with the separating element arranged in the raceway one of the two spaces is in correspondence with at least one through housing and the other one of the two spaces is in correspondence with the releasable area.

The modular unit preferably comprises at least one functional element and one receiving area, the receiving area being configured for the secured arrangement of the functional element.

Preferably, the functional element can be selected from an organising element for arranging various elements separated from one another, a resting element for the supported arrangement of external elements and a set of sheets of paper.

### Description of the figures

Figure 1 shows an exploded schematic view of a modular unit for the supply of electrical power and/or data object of the invention, according to a preferred embodiment.
Figures 2 to 7 show schematic perspective views of the modular unit object of the invention, according to different preferred embodiments.
Figure 8 shows a cross section view of a raceway comprised in the modular unit object of the invention.
Figure 9 shows a schematic perspective view of a cover comprised in the modular unit object of the invention, according to an embodiment.
Figures 10 and 11 show schematic views of a casing comprised in the modular unit object of the invention, according to an embodiment.
Figures 12 and 13 show schematic views of another casing comprised in the modular unit object of the invention, according to an embodiment.

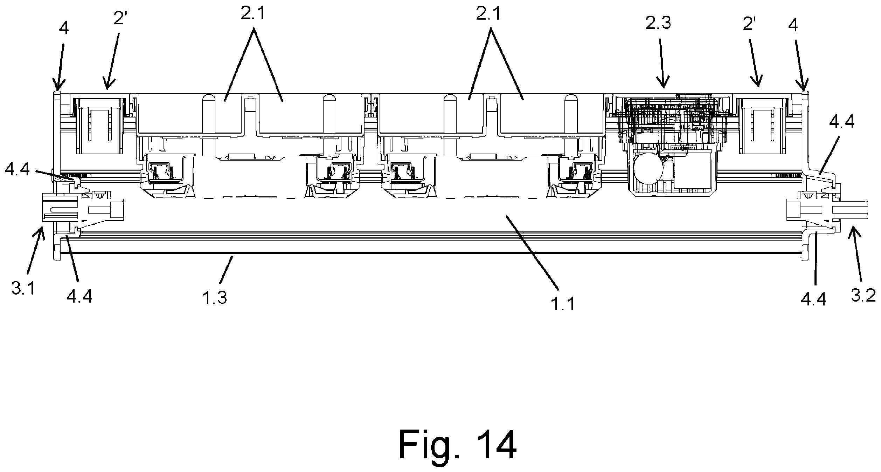

Figure 14 shows a schematic longitudinal section view of the modular unit object of the invention, according to the preferred embodiment.
Figures 15A and 15B show views of a functional element comprised in the modular unit object of the invention, according to an embodiment option.
Figures 16A and 16B show views of another functional element comprised in the modular unit object of the invention, according to an embodiment option.
Figures 17 to 19 show views of a separating element comprised in the modular unit object of the invention.

### Detailed description of the invention

The present invention relates to a modular unit for the supply of electrical power and/or data, comprising at least one longitudinal cable raceway (1), which comprises two side flaps (1.1) with borders (1.1') defining a longitudinal opening (1.2) and a base (1.3) joining the two side flaps (1.1) to one another on sides opposite those where the borders (1.1') are located.

The modular unit additionally comprises at least one component (2) that can be fed by means of electrical power and/or data, which can be placed by coupling, preferably by clipping, in the raceway (1) in correspondence with the longitudinal opening (1.2). For this purpose, in correspondence with each of the side flaps (1.1), the raceway (1) comprises a hook (1.4), pointing towards the longitudinal opening (1.2), such that they retain said components (2) together with the borders (1.1').

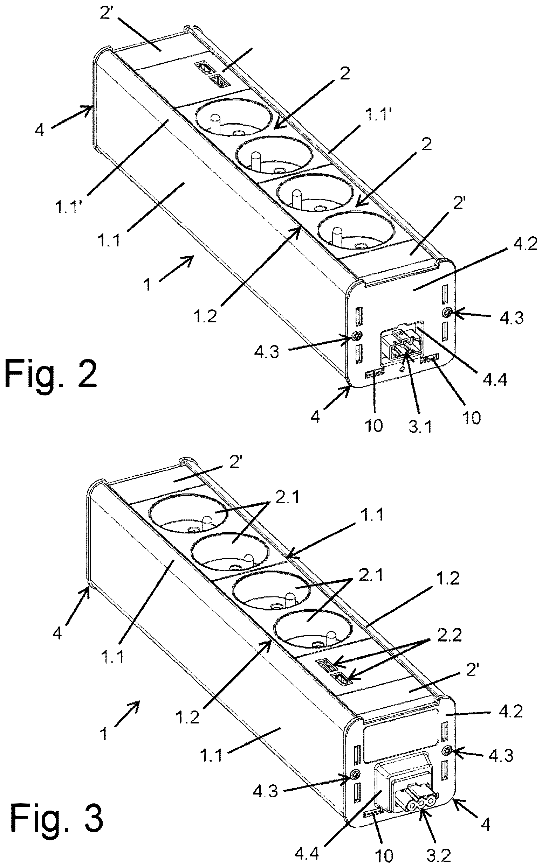

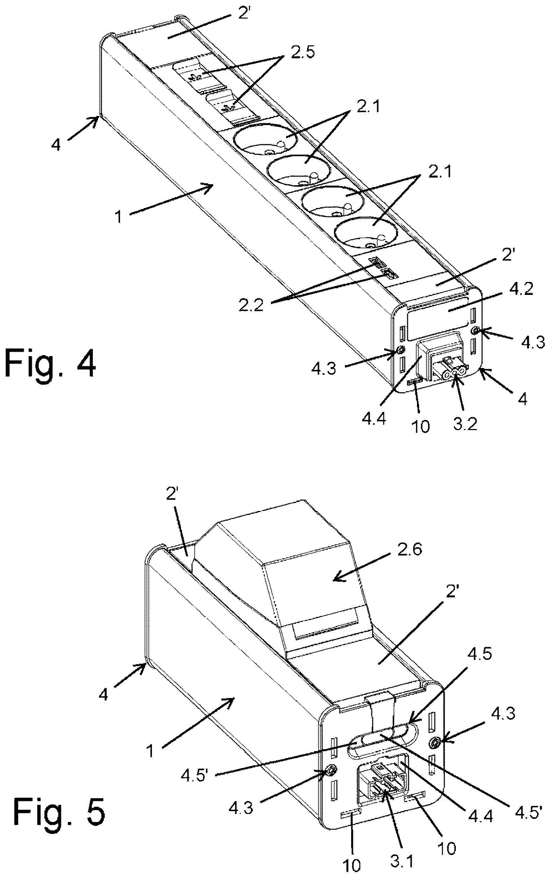

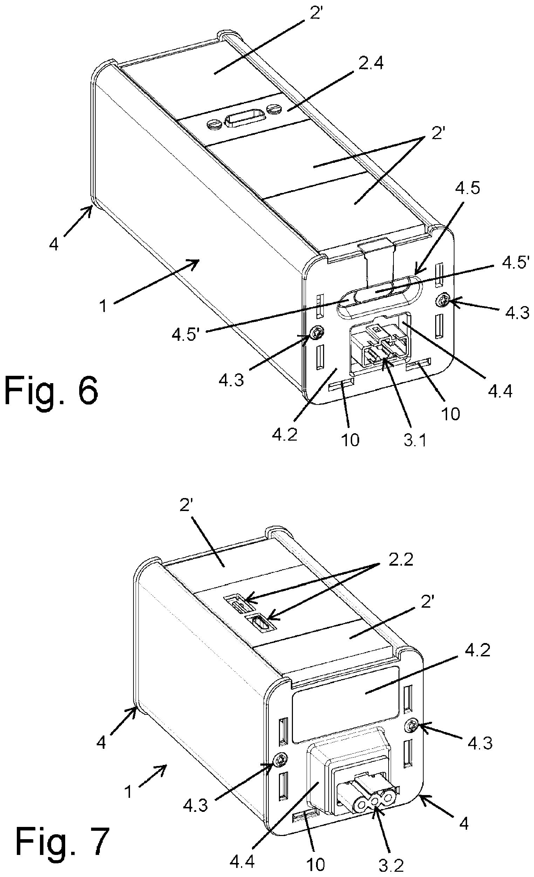

Some of the components (2) that can be selected, individually or in an equally combined manner, are electrical outlets (2.1), USB type-A or type-C ports (2.2), WI-FI signal repeaters (2.3), HDMI connectors (2.4), RJ45 connectors (2.5), boxes with at least one differential switch (2.6), wireless chargers, microphones and/or speakers, lamps, etc. See several embodiments in Figures 2 to 7.

The modular unit can comprise one or several complementary elements (2') for being arranged such that the longitudinal opening (1.2) is covered, together with the component or components (2) coupled therein.

The modular unit additionally comprises at least a first connector (3.1) at a longitudinal end of the raceway (1) and at least a second connector (3.2) at another longitudinal end of the raceway (1). Accordingly, the first connector (3.1) and the second connector (3.2) can be connected to one another in a complementary manner, such that the modular unit can be connected by means of its first connector (3.1) or its second connector (3.2) to another one of these modular units by means of its second connector (3.2) or its first connector (3.1), respectively.

Thus, the modular unit can be made up of two or more of these raceways (1) connected in series, upon arranging the first connector (3.1) of one of the raceways (1) connected with the second connector (3.2) of the other one of the raceways (1), and so on and so forth.

Accordingly, the first connector (3.1) is a male plug or socket, while the second connector (3.2) is a female plug. Likewise, preferably the first connector (3.1) and the second connector (3.2) are electrical or power connectors, i.e., for receiving and feeding electrical power. Alternatively, the first connector (3.1) and the second connector (3.2) are data connectors, i.e., for receiving and feeding data.

Preferably, there is one first connector (3.1) arranged in the raceway (1), and more preferably there are two. In the event that there are two first connectors (3.1), they are preferably located in correspondence with the same longitudinal end of the raceway (1).

In the same manner, preferably there is one second connector (3.2) arranged in the raceway (1), and more preferably there are two. In the event that there are two second connectors (3.2), they are preferably located in correspondence with the same longitudinal end of the raceway (1).

According to the embodiments in which there are two second connectors (3.2), preferably one is fed by a power supply, referred to as the main or general power supply, whereas the other one is fed by another power supply, which can be referred to as secondary, auxiliary or emergency power supply, i.e., power supplies that are different from one another. Accordingly, the raceway (1) is configured such that one of the second connectors (3.2) is arranged for feeding at least one of the components (2) and another one of the second connectors (3.2) is arranged for feeding at least another one of the components (2).

Likewise, the modular unit comprises covers (4), two for each of the raceways (1), for covering the longitudinal ends of the raceway (1), each of the covers (4) having an inner face (4.1) and an outer face (4.2).

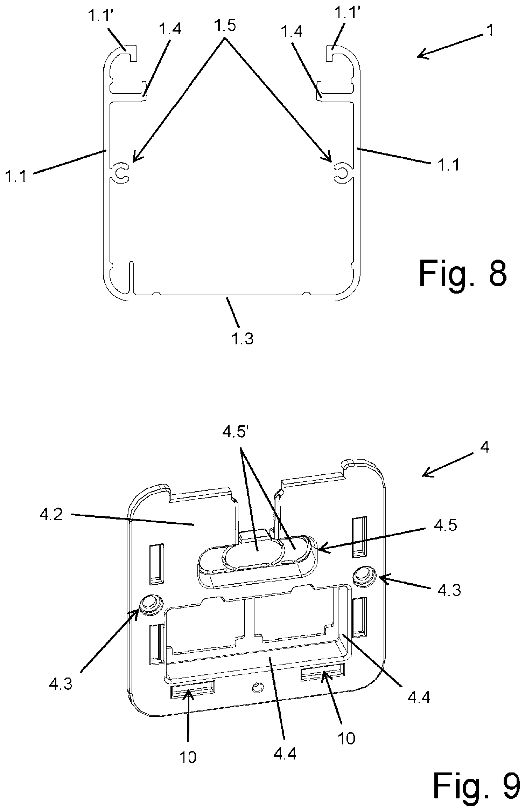

For the purpose of assuring an attachment between the covers (4) and the raceway (1), said covers (4) have through points (4.3) and the raceway (1) has fixing points (1.5). The fixing points (1.5) are C-shaped according to the cross section of the raceway (1), as can be seen in Figure 8. Said fixing points (1.5) preferably extend along the two side flaps (1.1) or at least one of said side flaps (1.1). Likewise, the fixing points (1.5) are located between the base (1.3) and the hooks (1.4).

Accordingly, the through points (4.3) and the fixing points (1.5) are correspondingly arranged for fixing the attachment between the covers (4) and the raceway (1) by means of threaded attachments, for example by means of screws, established such that said through points (4.3) and fixing points (1.5) coincide.

The covers (4) have through housings (4.4) for housing or holding the corresponding connectors (3.1, 3.2). The through housings (4.4) are configured for arranging said connectors (3.1, 3.2) such that they are fixed.

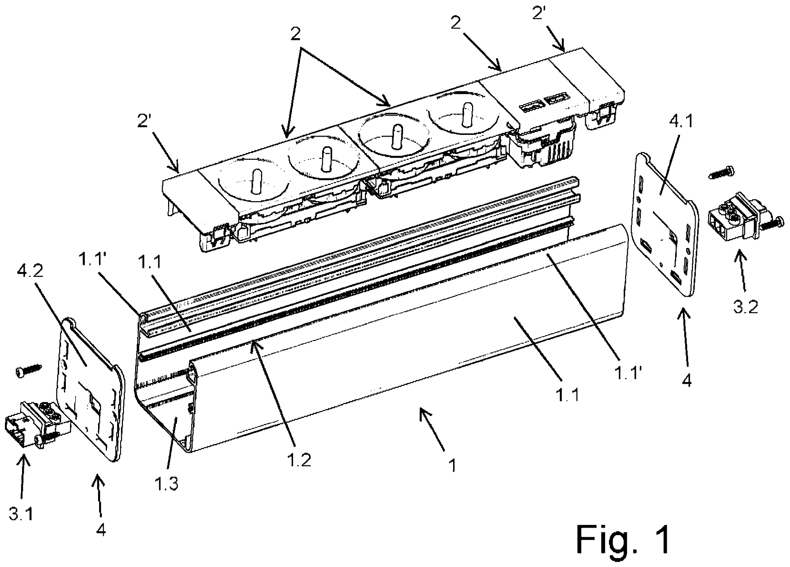

Preferably, the through housings (4.4) have a longitudinal extension such that they partially surround said connectors (3.1, 3.2) in accordance with an arrangement of said connectors (3.1, 3.2) in the through housings (4.4). Accordingly and preferably, the through housings (4.4) which house, or are intended for housing, the first connectors (3.1) extend internally with respect to the raceway (1), as can be seen for example in Figure 1, with the covers (4) covering the longitudinal ends of the raceways (1). Likewise, also preferably, the through housings (4.4) which house, or are intended for housing, the second connectors (3.2) extend externally with respect to the raceway (1), as can also be seen for example in Figure 1, with the covers (4) covering the longitudinal ends of the raceways (1).

These through housings (4.4) are configured either for housing one or two of the first connectors (3.1) or for housing one or two of the second connectors (3.2). As can be seen in Figure 9, the through housings (4.4) can be arranged internally extended, i.e., projecting from the inner face (4.1), for housing two of the first connectors (3.1). Likewise, the through housings (4.4) can be arranged externally extended, i.e., projecting from the outer face (4.2), for housing two of the second connectors (3.1).

Optionally, one or both of the covers (4) longitudinally closing the corresponding raceway (1) comprise a releasable area (4.5) configured for establishing a passage or a blocking through same. Thus, the releasable area (4.5) has one, two or more detachable portions (4.5'), which are removable or removed such that the passage through the cover (4) through the corresponding through hole is determined in accordance with one, two or more sizes, depending on the number of detachable portions (4.5') removed or detached. For this, the releasable area (4.5) has one or several debilitations or recesses of thickness. Said debilitations or recesses are configured such that they result in breaking points by applying pressure.

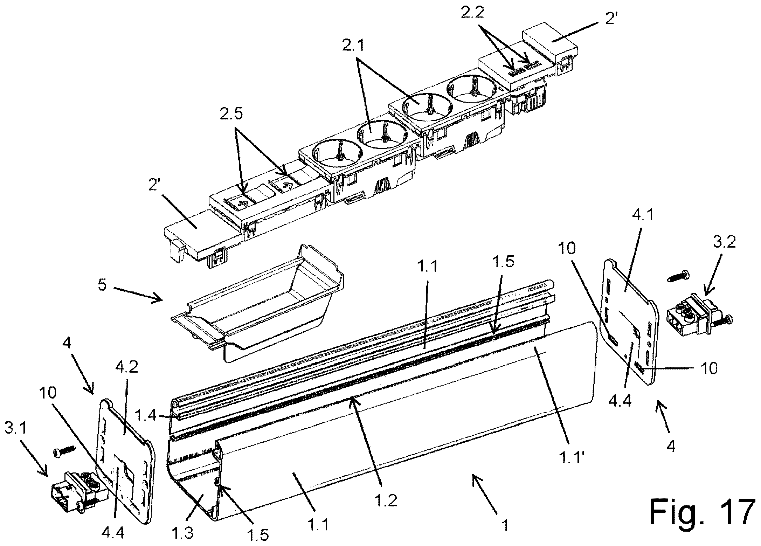

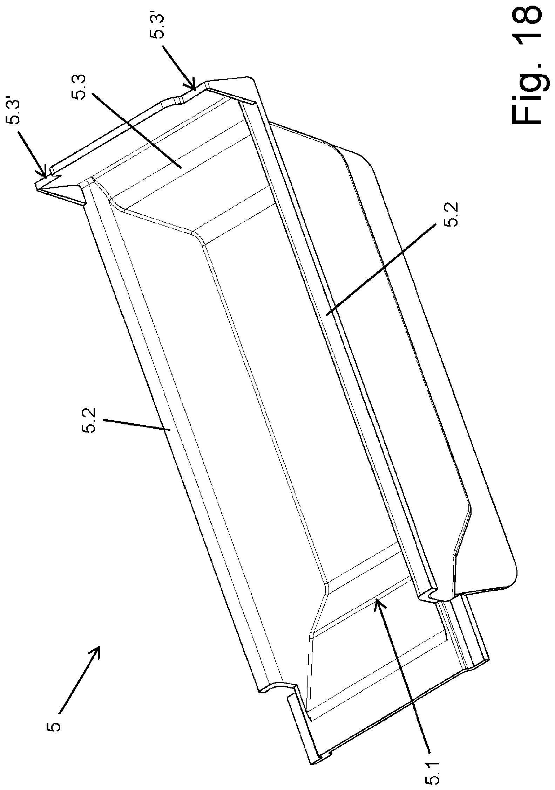

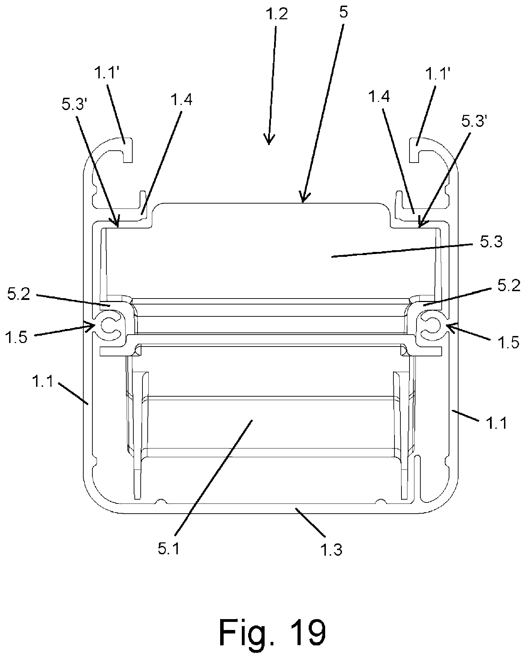

The modular unit can comprise a separating element (5) configured for defining two spaces, an upper space and a lower space, along at least one segment of the longitudinal extension of the raceway (1). The separating element (5) has a bottom (5.1) for defining the longitudinal spaces described. See Figures 17 to 19.

With the separating element (5) arranged in the raceway (1), one of the spaces, specifically the lower space, is in correspondence with at least one of the through housings (4.4). Moreover, and with the separating element (5) arranged in the raceway (1), the other one of the spaces, specifically the upper space, is in correspondence with the releasable area (4.5).

The separating element (5) is thereby arranged providing a separation between the wiring to be arranged through the releasable area (4.5) and the wiring to be arranged through the through housing (4.4), or at least of the wiring connected to the corresponding connector (3.1, 3.2). Thus, the separating element (5) provides an order or separation between different wiring along at least the mentioned segment of the raceway (1), i.e., the modular unit.

The separating element (5) is arranged within the raceway (1) while at the same time one or several of the components (2), such as for example RJ45 connectors (2.5), are coupled in the longitudinal opening (1.2) on said separating element (5). Thus, wiring for supplying data to the component (2) or components (2), such as RJ45 connectors (2.5) for example, has an outlet in the releasable area (4.5) at least one of the detachable portions (4.5') having been removed, said wiring extending only through the upper longitudinal space, separated from the wiring that can be located in the lower longitudinal space which may be for feeding electrical power.

The separating element (5) additionally has supports (5.2) for being arranged in the raceway (1), preferably in contact on the fixing points (1.5). Additionally, the separating element (5) has a wall (5.3) at an end opposite the end intended to be arranged facing the corresponding cover (4). This wall (5.3) is for establishing a longitudinal stop of the space in correspondence with the detachable portion (4.4), or the corresponding through hole, i.e., the upper longitudinal space.

This wall (5.3) includes fitting areas (5.3'), preferably by way of side recesses, for housing the hooks (1.4) of the side flaps (1.1). The separating element (5) is thereby arranged such that it its movement is limited or blocked according to movements for approaching the base (1.3) by the supported arrangement of the supports (5.2) on the fixing points (1.5), in addition to the movement being limited or blocked according to movements for moving away from the base (1.3) according to the part corresponding to the location of the wall (5.3) by means of contact of the fitting areas (5.3') against the hooks (1.4).

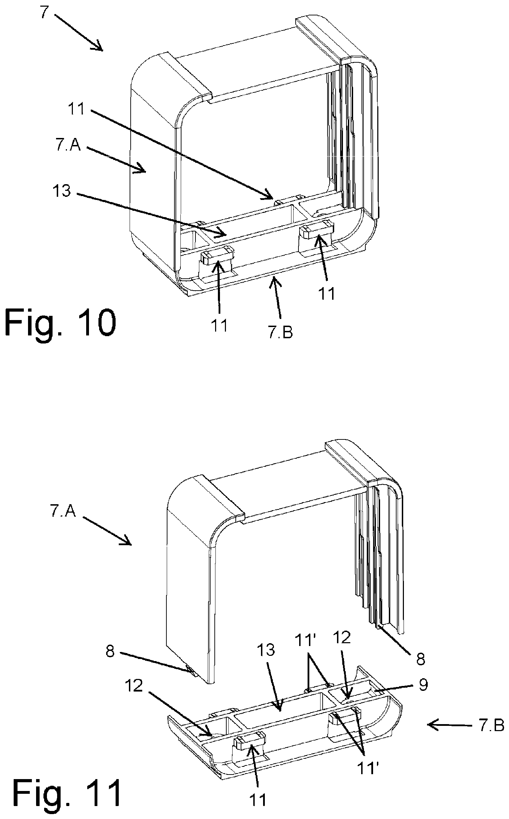

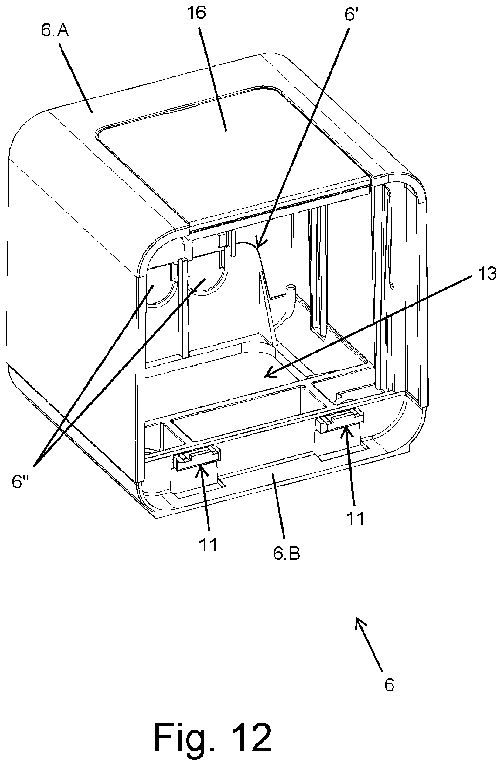

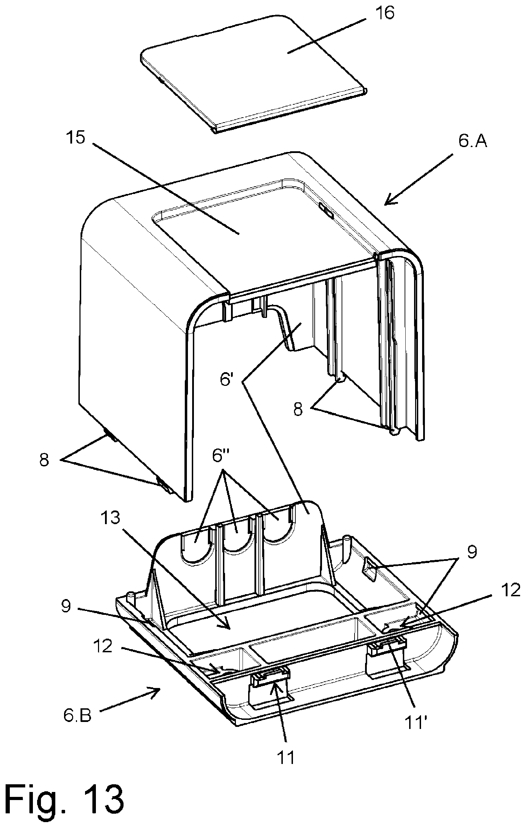

The modular unit comprises at least one casing (6; 7). The casings (6; 7) can be selected from a first casing (6) and a second casing (7). Said casings (6; 7) comprise two parts (6.A, 6.B; 7.A, 7.B), an upper part (6.A; 7.A) and a lower part (6.B; 7.B), as shown in Figures 11 and 13. Said parts (6.A, 6.B; 7.A, 7.B) can be attached to one another, as can be seen in Figures 10 and 12. Said attachment is removable and is preferably established by clipping or snap fitting.

Accordingly, the casings (6; 7) have toothed projections (8) and cavities (9) such that, by clipping or snap fitting, the toothed projections (8) can be housed in the cavities (9) for establishing the attachment between the corresponding parts (6.A, 6.B; 7.A, 7.B). Preferably, the toothed projections (8) are located in the upper parts (6.A; 7.A) and the cavities (9) in the lower parts (6.B; 7.B), although alternatively the toothed projections (8) can be located in the lower parts (6.B; 7.B) and the cavities (9) in the upper parts (6.A; 7.A).

The casings (6; 7) are configured for being arranged coupled on the covers (4). Accordingly, the modular unit comprises attachment means for removably attaching by snap fitting, the casings (6; 7) to the covers (4).

The first casings (6) are configured for covering the outer face (4.2) of the covers (4). That is, these casings (6) are arranged attached to the covers (4) such that in addition to determining a substantially continuous perimetral envelopment of the outer perimetral contour of the raceway (1), with the longitudinal opening (1.2) included, they determine a longitudinal limit or stop by including an end wall (6'), in accordance with the longitudinal extension of the raceway (1) for the arrangement thereof. See Figure 12.

Accordingly, the first casing (6) has a face for attachment with the corresponding cover (4) and of the end wall (6'), longitudinally opposite the face for attachment, as can be deduced from Figures 12 and 13. The first casing (6) thereby provides a block against unwanted and troublesome interactions with the corresponding cover (4); i.e., with the connectors (3.1, 3.2), available wiring through releasable area (4.5), etc.

The second casing (7), in turn, has two faces for attachment, both longitudinally opposite one another, as can be deduced from Figures 10 and 11, such that it can be attached to two of the covers (4). The second casing (7) thereby provides an attachment or connection of two of the modular units to one another, such that they form an element.

Accordingly, the other casing (7), the second casing, is devoid of any end wall, such that it determines a longitudinal passage through same, while at the same time it is arranged between the two corresponding raceways (1) by way of an additional element for attachment to one another, in accordance with the longitudinal extension of the raceway (1) for the arrangement thereof. More specifically, in this case, the mentioned casing (7) is arranged attached to the cover (4) placed at one of the longitudinal ends of one of the raceways (1), while at the same time to the cover (4) placed at one of the longitudinal ends of the other one of the raceways (1).

The second casing (7) is thereby arranged providing a structural continuity between two of the described raceways (1), the corresponding connectors (3.1, 3.2) being concealed, the releasable areas (4.5) located and the wiring available through said releasable areas (4.5), in addition to the covers (4) themselves.

Specifically, the two casings (6; 7) are configured for surrounding the perimeter of at least one of the connectors (3.1, 3.2), and therefore for surrounding at least one of the through housings (4.4) extending externally with respect to the raceway (1), in addition to the releasable areas (4.5) which can be located and the wiring available through said releasable areas (4.5), the corresponding cover (4) being placed at one of the longitudinal ends of the raceway (1), in addition to the cover (4) itself.

The attachment means comprise at least one through opening (10) and a projection (11) with at least one protuberance (11'), the projection (11) being insertable through the through opening (10) such that the protuberance (11') exerts retention. The through openings (10) and the projections (11) are arranged in a complementary manner such that, with the casings (6; 7) arranged coupled on the covers (4), the projections (11) are inserted through said through openings (10).

Preferably, there are at least two through openings (10) and projections (11) to provide the attachment in a more stable manner between the casings (6; 7) and the covers (4). Likewise, each of the projections (11) has one, two or more of the protuberances (11').

Preferably, the through openings (10) are located in the covers (4) and the projections (11) in the casings (6; 7). More preferably, the through openings (10) are located in correspondence with a lower side of the covers (4), i.e., the side arranged, or to be arranged, in correspondence with the base (1.3) of the raceway (1). Alternatively, the location of the through openings (10) and the projections (11) can be the reverse or opposite.

The casings (6; 7) comprise a through hole (12) for being fixed to an external structural element, which is not object of the present invention. Preferably, there are at least two through holes (12) to provide the fixing in a more stable manner between the corresponding external structural element and the casings (6; 7), and more specifically their lower parts (6.B; 7.B).

Nails, screws or similar elements can be used for this fixing. The casings (6; 7), by means of the coupled arrangement on the covers (4) while at the same time said covers (4) are attached to the raceway (1), provide the modular unit with the capacity to be fixed to the corresponding external structural element. Said external structural element can be a table, a board, a shelf, a pedestal or any other element allowing the fixed arrangement thereof.

The first casings (6) and/or the second casings (7) comprise a passage (13) configured for determining access to one of the connectors (3.1, 3.2), as well as to the releasable area (4.5), by at least one external cable. This passage (13) is preferably located on a bottom or lower plane of the casings (6; 7), i.e., in correspondence with a support part against the corresponding external structural element for the fixed arrangement thereof. See Figures 10 to 13.

Said passages (13) thereby provide the possibility of feeding the modular unit by means of electricity and/or data with the wiring arranged in view, at least in correspondence with the modular unit itself, being minimised or even eliminated.

The first casings (6) preferably have at least one detachable part (6") for an alternative or additional wiring passage. Accordingly, the detachable part or parts (6") are preferably located at the end wall (6'), as shown in Figures 12 and 13.

Likewise, the end wall (6') is formed or determined by a portion corresponding to the upper part (6.A) of the first casings (6) and another portion corresponding to the lower part (6.B) of the first casings (6), as can be seen in Figures 12 and 13.

Accordingly, the corresponding detachable parts (6") are located in one of the mentioned portions such that they contact the complementary portion when the upper part (6.A) and lower part (6.B) are arranged assembled to one another. Therefore, by means of the removal or detachment of the corresponding detachable parts (6"), the appropriate wiring is available through the first casing (6), the upper part (6.A) and lower part (6.B) being assembled to one another, without requiring insertion through the established alternative or additional passage.

The modular unit is configured for arranging one or several functional elements (14). The functional elements (14) are comprised in the modular unit and have coupling points (14') for being arranged secured in the modular unit.

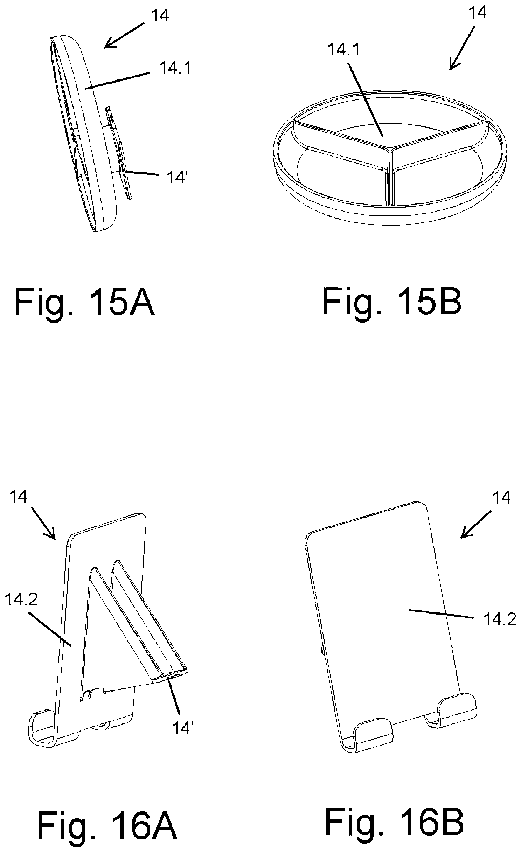

An example of these functional elements (14) is, as can be seen in Figures 15A and 15B, for example, an organising element (14.1) for arranging various elements preferably having small dimensions separated from one another, such as clips, thumbtacks, and similar elements.

Another example of these functional elements (14) is, as can be seen in Figures 16A and 16B, for example, a resting element (14.2) for the supported arrangement of external elements, such as mobile telephones, tablets, books, or similar elements.

Another additional example of these functional elements (14), not shown in the figures, is a set of sheets of self-adhesive paper having variable dimensions, shapes and colours, which are at least partially bonded to one another.

Preferably, the first casings (6) and/or the second casings (7) are configured for securing the functional elements (14), and more specifically in correspondence with an upper face, opposite the bottom, and by an outer part. Accordingly, the casings (6; 7) have a receiving area (15) configured for the secured arrangement of the corresponding functional element (14), according to the coupling points (14').

In addition or as an alternative to this described aspect, the complementary elements (2') are correspondingly configured for said securing of the functional elements (14).

The casings (6; 7) have a top (16) for being arranged filling in the receiving area (15) when it is not in use. Said top (16) provides structural continuity and uniformity to the modular unit, and more specifically to the casings (6; 7) when they are free of the functional elements (14).

## Claims

1. A modular unit for the supply of electrical power and/or data, comprising:
- at least one component (2) that can be fed by means of electrical power and/or data;
- a longitudinal cable raceway (1), comprising two side flaps (1.1) with borders (1.1') defining a longitudinal opening (1.2) for receiving the at least one component (2) and a base (1.3) joining the side flaps (1.1) to one another;
- covers (4) for covering longitudinal ends of the raceway (1), each of the covers (4) having an inner face (4.1), an outer face (4.2) and at least one through opening (10);
- a first connector (3.1) at one of the longitudinal ends of the raceway (1); and
- a second connector (3.2) at another one of the longitudinal ends of the raceway (1);
wherein the first connector (3.1) and the second connector (3.2) can be connected to one another in a complementary manner;
wherein the modular unit further comprises at least one casing (6, 7) configured to surround the perimeter of at least one of the connectors (3.1, 3.2) and each casing (6, 7) having an upper part (6.A, 7.A) and a lower part (6.B, 7.B) removably attached to one another,
wherein the at least one casing (6, 7) is configured to be removably attached to any one of the covers (4) such that the lower part (6.B, 7.B) of the at least one casing (6, 7) comprises at least one projection (11) with protuberance (11') configured to be snap fitted into a corresponding through opening (10) of the cover (4) such that the protuberance (11 ') exerts retention.

2. The modular unit according to claim 1, wherein the lower and upper parts (6.A, 6.B; 7.A, 7.B) of the casings (6, 7) are attached to one another by snap fitting.

3. The modular unit according to claim 1 or 2, wherein the casings (6; 7) comprise a through hole (12) for being fixed to an external structural element.

4. The modular unit according to any one of claims 1 to 3 wherein the casings (6; 7) comprise a passage (13) configured for an external cable to access one of the connectors (3.1, 3.2).

5. The modular unit according to any one of claims 1 to 4, wherein at least one of the casings (6) is configured for covering the outer face (4.2) of the covers (4).

6. The modular unit according to any one of claims 1 to 4, wherein there are two raceways (1), the first connector (3.1) of one of the raceways (1) being arranged connected with the second connector (3.2) of the other one of the raceways (1) and at least one of the casings (7) is located between the two raceways (1).

7. The modular unit according to any one of claims 1 to 6, wherein at least one of the covers (4) comprises a releasable area (4.5) having at least one detachable portion (4.5') which is removable, determining a passage through the cover (4).

8. The modular unit according to any one of claims 1 to 7, wherein it additionally comprises a separating element (5) configured for defining two spaces along at least one segment of the longitudinal extension of the raceway (1).

9. The modular unit according to claims 7 and 8, wherein the covers (4) have through housings (4.4) for housing the connectors (3.1, 3.2), such that with the separating element (5) arranged in the raceway (1), one of the two spaces is in correspondence with at least one through housing (4.4) and the other one of the two spaces is in correspondence with the releasable area (4.5).

10. The modular unit according to any one of claims 1 to 9, wherein it additionally comprises at least one functional element (14) and one receiving area (15), the receiving area (15) being configured for the secured arrangement of the functional element (14).

11. The modular unit according to claim 10, wherein the functional element (14) can be selected from an organising element (14.1) for arranging various elements separated from one another, a resting element (14.2) for the supported arrangement of external elements and a set of sheets of paper.

## Patentansprüche

1. Modulare Einheit zur Bereitstellung von elektrischer Energie und/oder Daten, die aufweist:
- wenigstens eine Komponente (2), die mittels elektrischer Leistung und/oder Daten gespeist werden kann;
- eine Längskabellaufschiene (1), die zwei Seitenumschläge (1.1) mit Rändern (1.1'), die eine Längsöffnung (1.2) zum Aufnehmen der wenigstens einen Komponente (2) und eine Basis (1.3), welche die Seitenumschläge (1.1) miteinander vereinigt, aufweist;
- Abdeckungen (4) zum Abdecken von Längsenden der Laufschiene (1), wobei jede der Abdeckungen (4) eine Innenseite (4.1), eine Außenseite (4.2) und wenigstens eine Durchgangsöffnung (10) hat;
- einen ersten Verbinder (3.1) an einem der Längsenden der Laufschiene (1); und
- einen zweiten Verbinder (3.2) an einem anderen der Längsenden der Laufschiene (1);
wobei der erste Verbinder (3.1) und der zweite Verbinder (3.2) in einer komplementären Weise miteinander verbunden werden können;
wobei die modulare Einheit ferner wenigstens ein Gehäuse (6, 7) aufweist, das konfiguriert ist, um den Umfang wenigstens eines der Verbinder (3.1, 3.2) zu umgeben, und wobei jedes Gehäuse (6, 7) einen oberen Teil (6.A, 7.A) und einen unteren Teil (6.B, 7.B), die abnehmbar aneinander befestigt sind, hat,
wobei das wenigstens eine Gehäuse (6, 7) konfiguriert ist, um abnehmbar an einer der Abdeckungen (4) befestigt zu werden, so dass der untere Teil (6.B, 7.B) des wenigstens einen Gehäuses (6, 7) wenigstens einen Vorsprung (11) mit Höcker (11') aufweist, der konfiguriert ist, um in eine entsprechende Durchgangsöffnung (10) der Abdeckung (4) einzurasten, so dass der Höcker (11') ein Festhalten ausübt.

2. Modulare Einheit nach Anspruch 1, wobei die unteren und oberen Teile (6.A, 6.B; 7.A, 7.B) der Gehäuse (6, 7) durch Einrasten aneinander befestigt sind.

3. Modulare Einheit nach Anspruch 1 oder 2, wobei die Gehäuse (6; 7) ein Durchgangsloch (12) aufweisen, um an einem externen Strukturelement fixiert zu werden.

4. Modulare Einheit nach einem der Ansprüche 1 bis 3, wobei die Gehäuse (6; 7) einen Durchgang (13) aufweisen, der dafür konfiguriert ist, dass ein externes Kabel Zugang zu einem der Verbinder (3.1, 3.2) hat.

5. Modulare Einheit nach einem der Ansprüche 1 bis 4, wobei wenigstens eines der Gehäuse (6) konfiguriert ist, um die Außenseite (4.2) der Abdeckungen (4) zu bedecken.

6. Modulare Einheit nach einem der Ansprüche 1 bis 4, wobei es zwei Laufschienen (1) gibt, wobei der erste Verbinder (3.1) einer der Laufschienen (1) mit dem zweiten Verbinder (3.2) der anderen der Laufschienen (1) verbunden eingerichtet ist und wenigstens eines der Gehäuse (7) zwischen den zwei Laufschienen (1) angeordnet ist.

7. Modulare Einheit nach einem der Ansprüche 1 bis 6, wobei wenigstens eine der Abdeckungen (4) einen abnehmbaren Bereich (4.5) mit wenigstens einem lösbaren Abschnitt (4.5'), der entfernbar ist, aufweist, der einen Durchgang durch die Abdeckung (4) definiert.

8. Modulare Einheit nach einem der Ansprüche 1 bis 7, wobei sie zusätzlich ein Trennelement (5) aufweist, das konfiguriert ist, um zwei Räume entlang wenigstens eines Segments der Längserstreckung der Laufschiene (1) zu definieren.

9. Modulare Einheit nach den Ansprüchen 7 und 8, wobei die Abdeckungen (4) Durchgangsgehäuse (4.4) zum Aufnehmen der Verbinder (3.1, 3.2) haben, so dass bei in der Laufschiene (1) eingerichteten Trennelement (5) einer der zwei Räume wenigstens einem Durchgangsgehäuse (4.4) entspricht und der andere der zwei Räume dem abnehmbaren Bereich (4.5) entspricht.

10. Modulare Einheit nach einem der Ansprüche 1 bis 9, wobei sie zusätzliche wenigstens ein Funktionselement (14) und einen Aufnahmebereich (15) aufweist, wobei der Aufnahmebereich (15) für die gesicherte Einrichtung des Funktionselements (14) konfiguriert ist.

11. Modulare Einheit nach Anspruch 10, wobei das Funktionselement (14) aus einem Organisationselement (14.1) zum Einrichten verschiedener voneinander getrennter Elemente, einem ruhenden Element (14.2) für die auflagernde Einrichtung externer Elemente und einem Satz von Blättern aus Papier ausgewählt werden kann.

## Revendications

1. Unité modulaire pour l'alimentation en énergie électrique et/ou en données, comprenant :
- au moins un composant (2) qui peut être alimenté à l'aide de l'énergie électrique et/ou des données ;
- une piste de roulement de câble longitudinal (1), comprenant deux rabats latéraux (1.1) avec des bordures (1.1') définissant une ouverture longitudinale (1.2) pour la réception de l'au moins un composant (2) et une base (1.3) joignant les rabats latéraux (1.1) l'un à l'autre ;
- des couvercles (4) pour le recouvrement d'extrémités longitudinaux de la piste de roulement (1), chacun des couvercles (4) ayant une face intérieure (4.1), une face extérieure (4.2) et au moins une ouverture débouchante (10) ;
- un premier connecteur (3.1) à une des extrémités longitudinales de la piste de roulement (1) ; et
- un deuxième connecteur (3.2) à l'autre des extrémités longitudinales de la piste de roulement (1) ;
dans laquelle le premier connecteur (3.1) et le deuxième connecteur (3.2) peuvent être reliés l'un à l'autre de manière complémentaire ;
dans laquelle l'unité modulaire comprend en outre au moins un boîtier (6, 7) configuré pour entourer le périmètre d'au moins un des connecteurs (3.1, 3.2) et chaque boîtier (6, 7) ayant une partie supérieure (6.A, 7.A) et une partie inférieure (6.B, 7.B) attachées de manière amovible l'une à l'autre,
dans laquelle l'au moins un boîtier (6, 7) est configuré pour être attaché de manière amovible à l'un quelconque des couvercles (4) de sorte que la partie inférieure (6.B, 7.B) de l'au moins un boîtier (6, 7) comprenne au moins une saillie (11) avec une protubérance (11') configurée pour être encliquetée dans une ouverture débouchante correspondante (10) du couvercle (4) de sorte que la protubérance (11') exerce une retenue.

2. Unité modulaire selon la revendication 1, dans laquelle les parties inférieure et supérieure (6.A, 6.B ; 7.A, 7.B) des boîtiers (6, 7) sont attachées l'une à l'autre par encliquetage.

3. Unité modulaire selon la revendication 1 ou 2, dans laquelle les boîtiers (6 ; 7) comprennent un trou débouchant (12) pour être fixé à un élément structurel externe.

4. Unité modulaire selon l'une quelconque des revendications 1 à 3, dans laquelle les boîtiers (6 ; 7) comprennent un passage (13) configuré pour qu'un câble externe accède à un des connecteurs (3.1, 3.2).

5. Unité modulaire selon l'une quelconque des revendications 1 à 4, dans laquelle au moins un des boîtiers (6) est configuré pour recouvrir la face extérieure (4.2) des couvercles (4).

6. Unité modulaire selon l'une quelconque des revendications 1 à 4, dans laquelle il y a deux pistes de roulement (1), le premier connecteur (3.1) d'une des pistes de roulement (1) étant agencé relié au deuxième connecteur (3.2) de l'autre des pistes de roulement (1) et au moins un des boîtiers (7) est situé entre les deux pistes de roulement (1).

7. Unité modulaire selon l'une quelconque des revendications 1 à 6, dans laquelle au moins un des couvercles (4) comprend une zone libérable (4.5) ayant au moins une partie détachable (4.5') qui est amovible, déterminant un passage à travers le couvercle (4).

8. Unité modulaire selon l'une quelconque des revendications 1 à 7, dans laquelle elle comprend en outre un élément de séparation (5) configuré pour définir deux espaces le long d'au moins un segment de l'extension longitudinale de la piste de roulement (1).

9. Unité modulaire selon les revendications 7 et 8, dans laquelle les couvercles (4) présentent des logements débouchants (4.4) pour le logement des connecteurs (3.1, 3.2) de sorte qu'avec l'élément de séparation (5) agencé dans la piste de roulement (1), un des deux espaces est en correspondance avec au moins un logement débouchant (4.4) et l'autre des deux espaces est en correspondance avec la zone libérable (4.5).

10. Unité modulaire selon l'une quelconque des revendications 1 à 9, dans laquelle elle comprend en outre au moins un élément fonctionnel (14) et une zone de réception (15), la zone de réception (15) étant configurée pour l'agencement fixé de l'élément fonctionnel (14).

11. Unité modulaire selon la revendication 10, dans laquelle l'élément fonctionnel (14) peut être sélectionné parmi un élément d'organisation (14.1) pour l'agencement de divers éléments séparés l'un de l'autre, un élément de repos (14.2) pour l'agencement supporté d'éléments externes et un ensemble de feuilles de papier.
